# EUROPÄISCHE PATENTSCHRIFT

(11) **EP 2 913 597 B1**
(45) Veröffentlichungstag und Bekanntmachung des Hinweises auf die Patenterteilung: **29.11.2017**
(21) Anmeldenummer: 15155717.0
(22) Anmeldetag: 19.02.2015
(51) Int. Cl.: F24F 1/02, F16L 9/00, F16L 9/19, F16L 39/00, F24F 7/08, F24F 13/02

(54) **Wärmetechnische Anlage**
Thermal installation
Installation thermique

(30) Priorität: 28.02.2014 DE 102014102652
(43) Veröffentlichungstag der Anmeldung: 02.09.2015
(73) Patentinhaber: Viessmann Werke GmbH & Co. KG, 35108 Allendorf (DE)
(72) Erfinder: Bätzel, Jörg, 57319 Bad Berleburg (DE); Theis, Susanne, 35108 Allendorf (DE); Schleiter, Stefan, 35282 Rauschenberg (DE); Schwalm, Patrick, 34626 Neukirchen (DE)
(74) Vertreter: Wolf, Michael

(56) Entgegenhaltungen:
- EP-A1- 2 336 659
- DE-A1- 2 013 455
- DE-U1-202006 003 069
- KR-A- 20050 074 826
- ALPHA-INNOTEC: "Frischluft-Kur für Ihr Haus - Lüftungsssteme zur kontrollierten Wohnraumlüftung", FIRMENBROSCHÜRE, 28 February 2013 (2013-02-28), pages 1-16, XP055377369, Internet

## Beschreibung

Die Erfindung betrifft eine wärmetechnische Anlage gemäß dem Oberbegriff des Patentanspruchs 1.

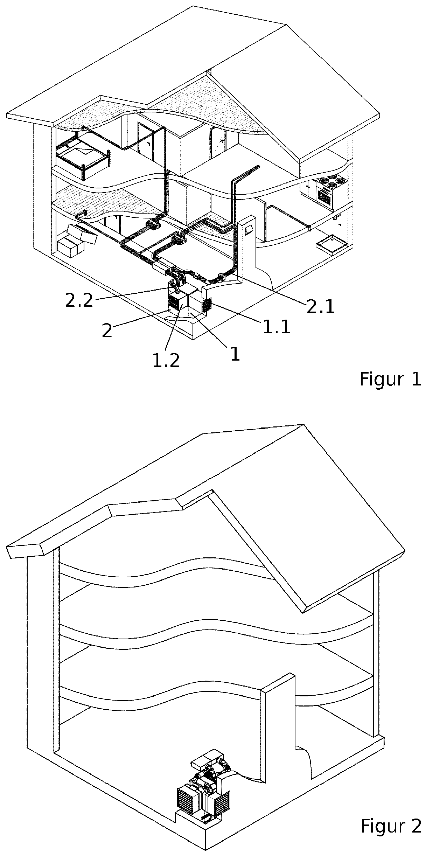

Eine wärmetechnische Anlage der eingangs genannten Art wird von der Firma ait-deutschland GmbH (siehe www.alpha-innotec.-de) herstellt und verkauft. In Figur 1, die einem aus dem Jahr 2012 stammenden Prospekt dieser Firma entnommen und für die vorliegende Anmeldung farblich entsprechend angepasst und mit Bezugszeichen versehen wurde, ist dieser Stand der Technik schematisch dargestellt. Diese Anlage besteht aus einem ersten, zur Aufstellung im Inneren eines Gebäudes ausgebildeten und zur Nutzung von Gebäudeumgebungsluft (also Luft außerhalb des Gebäudes) vorgesehenen Gerät (in diesem Fall eine Luftwärmepumpe) mit einem zur Mündung außerhalb des Gebäudes vorgesehenen, einen ersten Wanddurchbruch nutzenden Luftzufuhrkanal und mit einem zur Mündung außerhalb des Gebäudes vorgesehenen, einen zweiten Wanddurchbruch nutzenden Luftabfuhrkanal und aus einem zweiten, zur Aufstellung im gleichen Gebäude (vorzugsweise im gleichen Raum des Gebäudes) ausgebildeten und zur Nutzung von Gebäudeumgebungsluft vorgesehenen Gerät (in diesem Fall ein Lüftungsgerät) mit einem Luftzufuhrkanal und einem Luftabfuhrkanal. Bei dieser Lösung mündet der Luftabfuhrkanal des zweiten Gerätes noch innerhalb des Gebäudes in den Luftabfuhrkanal des ersten Gerätes, während der Luftzufuhrkanal des zweiten Gerätes über einen dritten Wanddurchbruch außerhalb des Gebäudes ausmündend ausgebildet ist. Auch die Broschüre "Frischluft-Kur für Ihr Haus - Lüftungssysteme zur kontrollierten Wohnraumlüftung" der Firma Alpha-innoTec aus dem Jahr 2013 offenbart eine solche wärmetechnische Anlage mit den Merkmalen des Oberbegriffs von Anspruch 1. Eine Anlage dieser Art hat, wie auch die noch zu erläuternde erfindungsgemäße Anlage, eine Doppelfunktion. Zum einen dient das erste Gerät, hier also die Wärmepumpe, dazu, Wärme aus der Gebäudeumgebungsluft von einem niedrigen Temperaturniveau zur Nutzbarmachung im Gebäude auf eine höheres Temperaturniveau zu heben. Hierzu wird Umgebungsluft über den Luftzufuhrkanal von außerhalb des Gebäudes angesaugt, der elektrisch betriebenen Luftwärmepumpe zugeführt und anschließend (entsprechend abgekühlt) über den Luftabfuhrkanal an die Umgebung des Gebäudes abgeführt. Das zweite Gerät, also das Lüftungsgerät, dient zum anderen zum Zwangsbelüften des Gebäudes, wobei über den Luftzufuhrkanal frische Umgebungsluft angesaugt und über den Luftabfuhrkanal verbrauchte Luft an die Umgebung abgeführt wird. Die Luftwärmepumpe kann alternativ aber auch zum Kühlen des Gebäudes verwendet werden.

Der Erfindung liegt die Aufgabe zugrunde, eine wärmetechnische Anlage der eingangs genannten Art zu verbessern. Insbesondere soll der Installationsaufwand und die Größe der Anlage verringert werden.

Diese Aufgabe ist mit einer wärmetechnischen Anlage der eingangs genannten Art durch die im Kennzeichen des Patentanspruchs 1 aufgeführten Merkmale gelöst.

Nach der Erfindung ist also vorgesehen, dass sowohl der Luftzufuhrkanal als auch der Luftabfuhrkanal des zweiten Gerätes (vorzugsweise ein Lüftungsgerät) gemeinsam wahlweise mit dem den ersten Wanddurchbruch nutzenden Luftzufuhrkanal oder mit dem den zweiten Wanddurchbruch nutzenden Luftabfuhrkanal des ersten Gerätes (vorzugsweise eine Luftwärmepumpe) als zur Mündung außerhalb des Gebäudes vorgesehene Kanaleinheit ausgebildet sind.

Mit anderen Worten zeichnet sich die erfindungsgemäße Anlage insbesondere dadurch aus, dass sie mit lediglich zwei, statt drei Wanddurchbrüchen auskommt. Dabei sind wahlweise der Luftzufuhrkanal oder der Luftabfuhrkanal des ersten Gerätes, der Luftzufuhrkanal des zweiten Gerätes und der Luftabfuhrkanal des zweiten Gerätes noch innerhalb des Gebäudes zu einem gemeinsamen Kanal zusammengefasst, wobei durch eine vorzugsweise vorgesehene distanzierte Anordnung des Luftzufuhrkanals des zweiten Gerätes innerhalb der Kanaleinheit zum Luftabfuhrkanal des zweiten Gerätes ein pneumatischer Kurzschluss ausgeschlossen ist. Luft strömt somit in das Gebäude hinein, und zwar sowohl in den Luftzufuhrkanal des ersten, als auch in den Luftzufuhrkanal des zweiten Gerätes. Vom ersten Gerät kommende Luft wird über den Luftabfuhrkanal des ersten Gerätes abgeführt. Vom zweiten Gerät kommende Luft wird wahlweise dem Luftzufuhrkanal oder dem Luftabfuhrkanal des ersten Gerätes zugeführt bzw. über die gemeinsamene Kanaleinheit nach außerhalb des Gebäudes abgeführt.

Falls die erfindungsgemäße Kanaleinheit am Luftzufuhrkanal des ersten Gerätes ausgebildet sein sollte, gilt Folgendes: Ist das erste Gerät, vorzugsweise die Luftwärmepumpe, ausgeschaltet, findet eine ungestörte Zu- und Abströmung zum jeweiligen Kanal des zweiten Gerätes statt. Ist das erste Gerät dagegen eingeschaltet, wird bewusst in Kauf genommen, dass zumindest ein Teil der vom zweiten Gerät über den Luftabfuhrkanal kommenden Luft über den Luftzufuhrkanal vom ersten Gerät wieder angesaugt wird. Dies ist dabei insofern mindestens unproblematisch bzw. sogar günstig, da auf diese Weise die im vom zweiten Gerät kommenden Luftstrom vorhandene Wärme noch im Wärmepumpenprozess genutzt werden kann.

Falls die Kanaleinheit am Luftabfuhrkanal des ersten Gerätes ausgebildet sein sollte, gilt (abgesehen von der erwähnten Ansaugung) Entsprechendes.

Andere vorteilhafte Weiterbildungen der erfindungsgemäßen wärmetechnischen Anlage ergeben sich aus den abhängigen Patentansprüchen.

Der Vollständigkeit halber wird noch auf folgenden, weiter abliegenden Stand der Technik hingeweisen:
Aus der KR 2005 0074826 A ist eine Klimaanlage mit zwei außerhalb des Gebäudes positionierten Ventilatoreinheiten bekannt.

Aus der DE 20 13 455 A1 ist eine Belüftungsvorrichtung mit einem zur Mündung außerhalb des Gebäudes vorgesehenen Luftzufuhrkanal und mit einem zur Mündung außerhalb des Gebäudes vorgesehenen Luftabfuhrkanal bekannt.

Aus der DE 20 2006 003 069 U1 ist ein Klimagerät mit einem Hauptgerät beschrieben, wobei außerdem noch ein im Grunde dem Hauptgerät entsprechendes Zusatzgerät vorgesehen ist, um für eine ausreichende Redundanz zu sorgen. Fällt das Hauptgerät aus, kann das Zusatzgerät als Ersatz verwendet werden.

Die erfindungsgemäße wärmetechnische Anlage einschließlich ihrer vorteilhaften Weiterbildungen gemäß der abhängigen Patentansprüche wird nachfolgend anhand der zeichnerischen Darstellung eines bevorzugten Ausführungsbeispiels näher erläutert. Bei diesem Ausführungsbeispiel sind erfindungsgemäß das erste Gerät als Luftwärmepumpe, das zweite Gerät als Lüftungsgerät und sowohl der Luftzufuhrkanal als auch der Luftabfuhrkanal des Lüftungsgeräts gemeinsam mit dem Luftzufuhrkanal der Luftwärmepumpe als außerhalb des Gebäudes mündende Kanaleinheit ausgebildet.

Es zeigt
- Figur 1: perspektivisch im Schnitt die nach dem Stand der Technik bekannte Lösung;
- Figur 2: perspektivisch im Schnitt die erfindungsgemäße Lösung;
- Figur 3: eine Ausschnittsvergrößerung aus Figur 2;
- Figur 4: eine erste Seitenansicht der Lösung gemäß Figur 2 (von vorne rechts);
- Figur 5: eine zweite Seitenansicht der Lösung gemäß Figur 2 (von vorne links);
- Figur 6: eine dritte Seitenansicht der Lösung gemäß Figur 2 (von hinten links);
- Figur 7: schematisch einen Längsschnitt durch den Luftzufuhrkanal; und
- Figur 8: schematisch einen Querschnitt durch den Luftzufuhrkanal gemäß Figur 7.

In den Figuren 2 bis 8 ist die erfindungsgemäße wärmetechnische Anlage im Detail dargestellt. Diese besteht aus einem ersten, zur Aufstellung im Inneren eines Gebäudes ausgebildeten und zur Nutzung von Gebäudeumgebungsluft vorgesehenen Gerät 1 mit einem zur Mündung außerhalb des Gebäudes vorgesehenen, einen ersten Wanddurchbruch nutzenden Luftzufuhrkanal 1.1 und mit einem zur Mündung außerhalb des Gebäudes vorgesehenen, einen zweiten Wanddurchbruch nutzenden Luftabfuhrkanal 1.2 und einem zweiten, zur Aufstellung im gleichen Gebäude bzw. Raum ausgebildeten und zur Nutzung von Gebäudeumgebungsluft vorgesehenen Gerät 2 mit einem Luftzufuhrkanal 2.1 und einem Luftabfuhrkanal 2.2. Wie bereits eingangs erwähnt, ist dabei, wie dargestellt, besonders bevorzugt (aber nicht zwingend) vorgesehen, dass das erste Gerät 1 als Wärmepumpe und das zweite Gerät 2 als Lüftungsgerät ausgebildet ist.

Weiterhin ist, wie auch beim Stand der Technik gemäß Figur 1 vorgesehen, dass wahlweise der Luftzufuhrkanal 1.1 und/oder der Luftabfuhrkanal 1.2 des ersten Gerätes 1 einen rechteckigen Durchströmquerschnitt aufweisen bzw. aufweist. Dabei sind bzw. ist wahlweise der Luftzufuhrkanal 2.1 und/oder der Luftabfuhrkanal 2.2 zwischen dem zweiten Gerät 2 und einem Ein- bzw. Austritt in den bzw. aus dem Luftzufuhrkanal 1.1 bzw. dem Luftabfuhrkanal 1.2 des ersten Gerätes 1 als Rohr ausgebildet. Außerdem sind bzw. ist eine zur Mündung außerhalb des Gebäudes vorgesehene Durchströmfläche 3 wahlweise des Luftzufuhrkanals 1.1 und/oder Luftabfuhrkanals 1.2 mit einer luftdurchlässigen Abdeckung (insbesondere mit einem so genannten Kiemenblech oder dergleichen) versehen.

Wesentlich für die erfindungsgemäße wärmetechnische Anlage ist nun, und diese Alternative ist in den Figuren 2 bis 8 dargestellt, dass sowohl der Luftzufuhrkanal 2.1 als auch der Luftabfuhrkanal 2.2 des zweiten Gerätes 2 gemeinsam mit dem den ersten Wanddurchbruch nutzenden Luftzufuhrkanal 1.1 des ersten Gerätes 1 als zur Mündung außerhalb des Gebäudes vorgesehene Kanaleinheit ausgebildet sind.

Alternativ (nicht extra dargestellt, weil ohne Weiteres vorstellbar) ist erfindungsgemäß vorgesehen, dass sowohl der Luftzufuhrkanal 2.1 als auch der Luftabfuhrkanal 2.2 des zweiten Gerätes 2 gemeinsam mit dem den zweiten Wanddurchbruch nutzenden Luftabfuhrkanal 1.2 des ersten Gerätes 1 als zur Mündung außerhalb des Gebäudes vorgesehene Kanaleinheit ausgebildet sind.

Oder nochmals in anderen Worten ausgedrückt, ist erfindungsgemäß vorgesehen, dass sowohl der Luftzufuhrkanal 2.1 als auch der Luftabfuhrkanal 2.2 des zweiten Gerätes 2 gemeinsam wahlweise mit dem Luftzufuhrkanal 1.1 oder mit dem Luftabfuhrkanal 1.2 des ersten Gerätes 1 aus dem Gebäude herausgeführt ausgebildet sind.

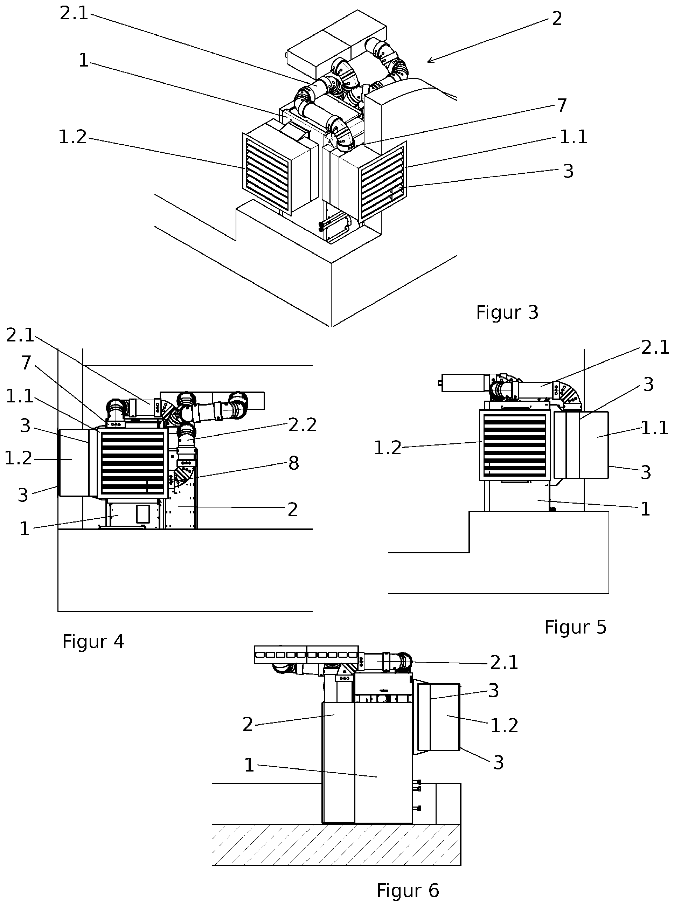

Mit Verweis insbesondere auf die Figuren 4 bis 7 ist bevorzugt vorgesehen, dass wahlweise der Luftzufuhrkanal 1.1 und/oder der Luftabfuhrkanal 1.2 des ersten Gerätes 1 einerseits eine geräteseitige und andererseits eine zur Mündung außerhalb des Gebäudes vorgesehene Durchströmfläche 3 aufweisen bzw. aufweist.

Ferner ist vorgesehen, dass wahlweise Abschnitte des in der Kanaleinheit geführten Luftzufuhrkanals 2.1 und/oder Luftabfuhrkanals 2.2 bis zur zur Mündung außerhalb des Gebäudes vorgesehenen Durchströmfläche 3 des Luftzufuhrkanals 1.1 bzw. Luftabfuhrkanals 1.2 erstreckt ausgebildet sind bzw. ist.

Mit Verweis auf die Figuren 3, 5 7 und 8 ist weiterhin besonders bevorzugt vorgesehen, dass zwischen der geräteseitigen Durchströmfläche 3 und dem ersten Gerät 1 ein Kanaladapterstück 4 angeordnet ist. Dieses Kanaladapterstück 4 bringt den großen Vorteil mit sich, dass eine bestehende Wärmepumpenanlage (ohne Lüftungsgerät) mit jeweils einer Wanddurchbrechung für den Luftzufuhrkanal 1.1 und den Luftabfuhrkanal 1.2 auf sehr einfache Weise und ohne weiteren Wanddurchbruch um ein Lüftungsgerät ergänzt werden kann, und zwar dadurch, dass man einen der beiden Kanäle 1.1 bzw. 1.2 entsprechend kürzt und dann das Kanaladapterstück 4 an dieser Stelle einfügt, wobei weiterhin vorgesehen ist (was unten noch genauer erläutert wird), dass sowohl der Luftzufuhrkanal 2.1 als auch der Luftabfuhrkanal 2.2 des zweiten Gerätes 2 an das Kanaladapterstück 4 pneumatisch angeschlossen ausgebildet sind.

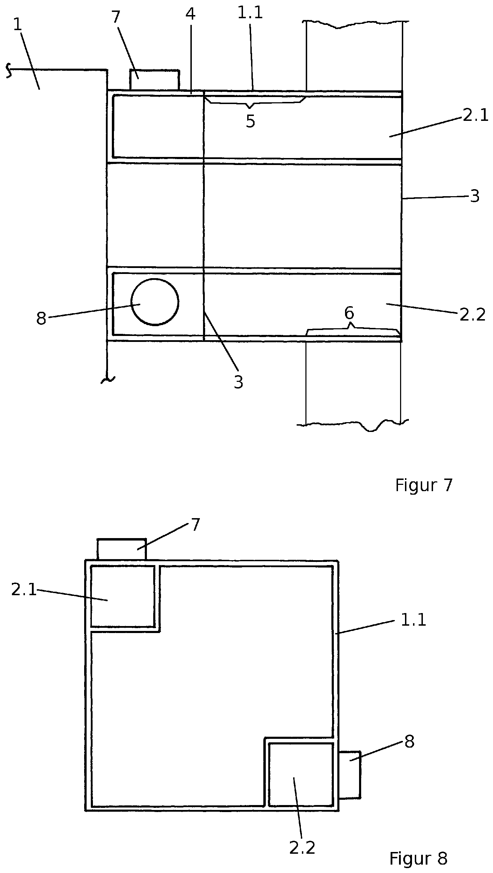

Ferner ist in diesem Kontext und insbesondere mit Verweis auf Figur 7 besonders bevorzugt vorgesehen, dass das Kanaladapterstück 4 und wahlweise der Luftzufuhrkanal 1.1 oder der Luftabfuhrkanal 1.2 querschnittsgleich ausgebildet sind.

Wie besonders gut aus den Figuren 3 und 7 zu erkennen, ist weiterhin vorgesehen, dass wahlweise der Luftzufuhrkanal 1.1 und/oder der Luftabfuhrkanal 1.2 einen ersten, zur Anordnung im Gebäude vorgesehenen und einen zweiten, zur Anordnung in einer Wandung des Gebäudes vorgesehenen Kanalabschnitt 5, 6 aufweisen bzw. aufweist.

Dabei sind sowohl der Luftzufuhrkanal 2.1 als auch der Luftabfuhrkanal 2.2 des zweiten Gerätes 2 im Bereich des ersten Kanalabschnitts 5 wahlweise an den Luftzufuhrkanal 1.1 oder den Luftabfuhrkanal 1.2 des ersten Gerätes 1 pneumatisch angeschlossen ausgebildet. Weiterhin sind sowohl der Luftzufuhrkanal 2.1 als auch der Luftabfuhrkanal 2.2 des zweiten Gerätes 2 im Bereich des zweiten Kanalabschnitts 6 die Kanaleinheit bildend innerhalb wahlweise des Luftzufuhrkanals 1.1 oder des Luftabfuhrkanals 1.2 des ersten Gerätes 1 angeordnet.

Wie besonders gut in Figur 8 zu erkennen, ist ferner bevorzugt vorgesehen, dass wahlweise der Luftzufuhrkanal 2.1 und/oder der Luftabfuhrkanal 2.2 des zweiten Gerätes 2 innerhalb des Luftzufuhrkanals 1.1 bzw. des Luftabfuhrkanals 1.2 einen rechteckigen Durchströmquerschnitt aufweisen bzw. aufweist. Außerdem ist zur Vermeidung eines pneumatischen Kurzschlusses vorgesehen, dass der Luftzufuhrkanal 2.1 und der Luftabfuhrkanal 2.2 des zweiten Gerätes 2 innerhalb des Luftzufuhrkanal 1.1 bzw. des Luftabfuhrkanals 1.2 an einander gegenüberliegenden Eckbereichen der Kanaleinheit angeordnet sind.

Die erfindungsgemäße wärmetechnische Anlage funktioniert wie folgt:
Im Heizbetrieb wird in der Wärmepumpe der zugeführten Umgebungsluft Wärme zur Nutzung im Gebäude entzogen (im Kühlbetrieb entsprechend umgekehrt). Die anschließend abgekühlte (bzw. aufgewärmte) Umgebungsluft wird dem Luftabfuhrkanal 1.2 zugeführt und verlässt auf diese Weise wieder das Gebäude.

Das Lüftungsgerät dient dazu, Luft im Gebäude umzuwälzen, wobei das Gebäude über das Lüftungsgerät aber gleichzeitig auch mit frischer Umgebungsluft versorgt und verbrauchte Luft abgeführt wird.

Über die außerhalb des Gebäudes angeordnete Durchströmfläche 3 des Luftzufuhrkanals 1.1 gelangt Umgebungsluft einerseits zur Wärmepumpe. Darüber hinaus gelangt Umgebungsluft über die genannte Durchströmfläche 3 und über den in der Kanaleinheit vorhandenen ersten Abschnitt des Luftzufuhrkanals 2.1 des zweiten Gerätes 2 zu einem am Kanaladapterstück 4 vorgesehenen Anschlussstutzen 7. Der Luftzufuhrkanal 2.1 weist dabei innerhalb der Kanaleinheit einen rechteckigen Querschnitt auf. Vom Anschlussstutzen 7 am Kanaladapterstück 4 führt ein einen zweiten Abschnitt des Luftzufuhrkanals 2.1 bildendes Rohr zum Lüftungsgerät.

Vom Lüftungsgerät kommende, verbrauchte Luft wird über den zunächst rohrförmigen Luftabfuhrkanal 2.2 zu einem am Kanaladapterstück 4 angeordneten Anschlussstutzen 8 geführt. Von dort gelangt die verbrauchte Luft über den in diesem Abschnitt einen rechteckigen Querschnitt aufweisenden Luftabfuhrkanal 2.2 in die Umgebung des Gebäudes.

Wie ersichtlich, besteht die Besonderheit der Erfindung darin, einen einzigen Wanddurchbruch für insgesamt drei Leitungen gleichzeitig zu nutzen, wobei bestehende Wärmepumpenanlage ohne Lüftungsgerät Dank der erfindungsgemäßen Lösung leicht mit einem Lüftungsgerät nachrüstbar sind.

### Bezugszeichenliste

- 1: erstes Gerät
- 1.1: Luftzufuhrkanal
- 1.2: Luftabfuhrkanal
- 2: zweites Gerät
- 2.1: Luftzufuhrkanal
- 2.2: Luftabfuhrkanal
- 3: Durchströmfläche
- 4: Kanaladapterstück
- 5: erster Kanalabschnitt
- 6: zweiter Kanalabschnitt
- 7: erster Anschlussstutzen
- 8: zweiter Anschlussstutzen

## Patentansprüche

1. Wärmetechnische Anlage, umfassend ein erstes, zur Aufstellung im Inneren eines Gebäudes ausgebildetes und zur Nutzung von Gebäudeumgebungsluft vorgesehenes Gerät (1) mit einem zur Mündung außerhalb des Gebäudes vorgesehenen, einen ersten Wanddurchbruch nutzenden Luftzufuhrkanal (1.1) und mit einem zur Mündung außerhalb des Gebäudes vorgesehenen, einen zweiten Wanddurchbruch nutzenden Luftabfuhrkanal (1.2) und ein zweites, zur Aufstellung im gleichen Gebäude ausgebildetes und zur Nutzung von Gebäudeumgebungsluft vorgesehenes Gerät (2) mit einem Luftzufuhrkanal (2.1) und einem Luftabfuhrkanal (2.2),
**dadurch gekennzeichnet,**
**dass** sowohl der Luftzufuhrkanal (2.1) als auch der Luftabfuhrkanal (2.2) des zweiten Gerätes (2) gemeinsam wahlweise mit dem den ersten Wanddurchbruch nutzenden Luftzufuhrkanal (1.1) oder mit dem den zweiten Wanddurchbruch nutzenden Luftabfuhrkanal (1.2) des ersten Gerätes (1) als zur Mündung außerhalb des Gebäudes vorgesehene Kanaleinheit ausgebildet sind.

2. Wärmetechnische Anlage nach Anspruch 1,
**dadurch gekennzeichnet,**
**dass** wahlweise der Luftzufuhrkanal (1.1) und/oder der Luftabfuhrkanal (1.2) des ersten Gerätes (1) einerseits eine geräteseitige und andererseits eine zur Mündung außerhalb des Gebäudes vorgesehene Durchströmfläche (3) aufweisen bzw. aufweist.

3. Wärmetechnische Anlage nach Anspruch 2,
**dadurch gekennzeichnet,**
**dass** wahlweise Abschnitte des in der Kanaleinheit geführten Luftzufuhrkanals (2.1) und/oder Luftabfuhrkanals (2.2) bis zur zur Mündung außerhalb des Gebäudes vorgesehenen Durchströmfläche (3) des Luftzufuhrkanals (1.1) bzw. Luftabfuhrkanals (1.2) erstreckt ausgebildet sind bzw. ist.

4. Wärmetechnische Anlage nach Anspruch 2 oder 3,
**dadurch gekennzeichnet,**
**dass** zwischen der geräteseitigen Durchströmfläche (3) und dem ersten Gerät (1) ein Kanaladapterstück (4) angeordnet ist.

5. Wärmetechnische Anlage nach Anspruch 4,
**dadurch gekennzeichnet,**
**dass** sowohl der Luftzufuhrkanal (2.1) als auch der Luftabfuhrkanal (2.2) des zweiten Gerätes (2) an das Kanaladapterstück (4) pneumatisch angeschlossen ausgebildet sind.

6. Wärmetechnische Anlage nach einem der Ansprüche 1 bis 5,
**dadurch gekennzeichnet,**
**dass** wahlweise der Luftzufuhrkanal (1.1) und/oder der Luftabfuhrkanal (1.2) einen ersten, zur Anordnung im Gebäude vorgesehenen und einen zweiten, zur Anordnung in einer Wandung des Gebäudes vorgesehenen Kanalabschnitt (5, 6) aufweisen bzw. aufweist.

7. Wärmetechnische Anlage nach Anspruch 6,
**dadurch gekennzeichnet,**
**dass** sowohl der Luftzufuhrkanal (2.1) als auch der Luftabfuhrkanal (2.2) des zweiten Gerätes (2) im Bereich des ersten Kanalabschnitts (5) wahlweise an den Luftzufuhrkanal (1.1) oder den Luftabfuhrkanal (1.2) des ersten Gerätes (1) pneumatisch angeschlossen ausgebildet sind.

8. Wärmetechnische Anlage nach Anspruch 6 oder 7,
**dadurch gekennzeichnet,**
**dass** sowohl der Luftzufuhrkanal (2.1) als auch der Luftabfuhrkanal (2.2) des zweiten Gerätes (2) im Bereich des zweiten Kanalabschnitts (6) die Kanaleinheit bildend innerhalb wahlweise des Luftzufuhrkanals (1.1) oder des Luftabfuhrkanals (1.2) des ersten Gerätes (1) angeordnet sind.

9. Wärmetechnische Anlage nach einem der Ansprüche 1 bis 8,
**dadurch gekennzeichnet,**
**dass** wahlweise der Luftzufuhrkanal (2.1) und/oder der Luftabfuhrkanal (2.2) des zweiten Gerätes (2) innerhalb des Luftzufuhrkanals (1.1) bzw. des Luftabfuhrkanals (1.2) einen rechteckigen Durchströmquerschnitt aufweisen bzw. aufweist.

10. Wärmetechnische Anlage nach einem der Ansprüche 1 bis 9,
**dadurch gekennzeichnet,**
**dass** der Luftzufuhrkanal (2.1) und der Luftabfuhrkanal (2.2) des zweiten Gerätes (2) innerhalb des Luftzufuhrkanal (1.1) bzw. des Luftabfuhrkanals (1.2) an einander gegenüberliegenden Eckbereichen der Kanaleinheit angeordnet sind.

## Claims

1. A thermal heating system, comprising a first device (1) adapted for installation inside a building and provided for utilising air from outside the building, with an air supply duct (1.1) provided to end outside the building and using a first wall breakthrough and an air discharge duct (1.2) provided to end outside the building and using a second wall breakthrough, and comprising a second device (2) adapted for installation in the same building and provided to use air from outside the building, with an air supply duct (2.1) and an air discharge duct (2.2),
**characterised in that**
both the air supply duct (2.1) and the air discharge duct (2.2) of the second device (2) are constructed in common optionally with the air supply duct (1.1) using the first wall breakthrough or with the air discharge duct (1.2) of the first device (1) using the second wall breakthrough so as to form a duct unit provided to end outside the building.

2. The thermal heating system according to claim 1,
**characterised in that**
optionally the air supply duct (1.1) and/or the air discharge duct (1.2) of the first device (1) on the one hand comprise/comprises a device-side through-flow surface (3) and on the other comprises a through-flow surface (3) provided to end outside the building.

3. The thermal heating system according to claim 2,
**characterised in that**
optionally sections of the air supply duct (2.1) and/or the air discharge duct (2.2) inside the duct unit is/are formed to extend as far as the throughflow-surface (3) of the air supply duct (1.1) / the air discharge duct (1.2), which is provided to end outside the building.

4. The thermal heating system according to claim 2 or 3,
**characterised in that**
a duct adapter piece (4) is arranged between the device-side throughflow surface (3) and the first device (1).

5. The thermal heating system according to claim 4,
**characterised in that**
both the air supply duct (2.1) and the air discharge duct (2.2) of the second device (2) are joined to the duct adapter piece (4) so as to form a pneumatic connection.

6. The thermal heating system according to one of claims 1 to 5,
**characterised in that**
optionally the air supply duct (1.1) and/or the air discharge duct (1.2) comprise/comprises a first duct section (5) provided to be arranged inside the building and a second duct section (6) provided to be arranged in a wall of the building.

7. The thermal heating system according to claim 6,
**characterised in that**
both the air supply duct (2.1) and the air discharge duct (2.2) of the second device (2) are formed so as to be connected pneumatically to either the air supply duct (1.1) or the air discharge duct (1.2) of the first device (1) in the area of the first duct section (5).

8. The thermal heating system according to claim 6 or 7,
**characterised in that**
both the air supply duct (2.1) and the air discharge duct (2.2) of the second device (2) forming the duct unit in the area of the second duct section (6) are arranged within optionally the air supply duct (1.1) or the air discharge duct (1.2) of the first device (1).

9. The thermal heating system according to one of claims 1 to 8,
**characterised in that**
optionally the air supply duct (2.1) and/or the air discharge duct (2.2) of the second device (2) comprise/comprises a square through-flow cross-section inside the air supply duct (1.1) / the air discharge duct (1.2).

10. The thermal heating system according to one of claims 1 to 9,
**characterised in that**
the air supply duct (2.1) and the air discharge duct (2.2) of the second device (2) are arranged in opposite corner areas of the duct unit inside the air supply duct (1.1) / the air discharge duct (1.2).

## Revendications

1. Installation thermique, comprenant un premier appareil (1) à installer à l'intérieur d'un bâtiment et prévu pour utiliser l'air ambiant du bâtiment comportant un premier canal d'alimentation d'air (1.1) prévu pour déboucher à l'extérieur du bâtiment, utilisant une première percée du mur et comportant un canal d'évacuation d'air (1.2) prévu pour déboucher à l'extérieur du bâtiment, utilisant une deuxième percée du mur et un deuxième appareil (2) à installer dans le même bâtiment et prévu pour utiliser l'air ambiant du bâtiment, comportant un canal d'alimentation d'air (2.1) et un canal d'évacuation d'air (2.2),
**caractérisé en ce**
**que** tant le canal d'alimentation d'air (2.1) que le canal d'évacuation d'air (2.2) du deuxième appareil (2) sont réalisés en commun au choix avec le canal d'alimentation d'air (1.1) utilisant la première percée du mur ou avec le canal d'évacuation d'air (1.2) utilisant la deuxième percée du mur du premier appareil (1) comme une unité de canaux prévue pour déboucher à l'extérieur du bâtiment.

2. Installation thermique selon la revendication 1,
**caractérise en ce**
**qu'**au choix le canal d'alimentation d'air (1.1) et/ou le canal d'évacuation d'air (1.2) du premier appareil (1) présente, respectivement présentent d'un côté une surface d'écoulement (3) prévue du côté de l'appareil et d'un autre côté une surface d'écoulement (3) prévue pour déboucher à l'extérieur du bâtiment.

3. Installation thermique selon la revendication 2,
**caractérisée en ce**
**qu'**au choix des portions du canal d'alimentation d'air (2.1) et/ou du canal d'évacuation d'air (2.2) guidées dans l'unité de canaux est, respectivement sont réalisées de manière à s'étendre jusqu'à la surface d'écoulement (3) prévue pour déboucher à l'extérieur du bâtiment du canal d'alimentation d'air (1.1), respectivement du canal d'évacuation d'air (1.2).

4. Installation thermique selon la revendication 2 ou 3,
**caractérisée en ce**
**qu'**entre la surface d'écoulement du côté de l'appareil (3) et le premier appareil (1) est disposée une pièce d'adaptateur de canal (4).

5. Installation thermique selon la revendication 4,
**caractérisée en ce**
**que** tant le canal d'alimentation d'air (2.1) que le canal d'évacuation d'air (2.2) du deuxième appareil (2) sont réalisés de manière à être raccordé pneumatiquement à la pièce d'adaptateur de canal (4).

6. Installation thermique selon une des revendications 1 à 5,
**caractérisée en ce**
**qu'**au choix le canal d'alimentation d'air (1.1) et/ou le canal d'évacuation d'air (1.2) présente, respectivement présentent une première portion de canal prévue pour être disposée dans le bâtiment et une deuxième portion de canal prévue pour être disposée dans une paroi du bâtiment (5, 6).

7. Installation thermique selon la revendication 6,
**caractérisée en ce**
**que** tant le canal d'alimentation d'air (2.1) que le canal d'évacuation d'air (2.2) du deuxième appareil (2) au niveau de la première portion de canal (5) sont réalisés de manière à être raccordés pneumatiquement au choix au canal d'alimentation d'air (1.1) ou au canal d'évacuation d'air (1.2) du premier appareil (1).

8. Installation thermique selon la revendication 6 ou 7,
**caractérisée en ce**
**que** tant le canal d'alimentation d'air (2.1) que le canal d'évacuation d'air (2.2) du deuxième appareil (2) sont disposés au niveau de la deuxième portion du canal (6) de manière à former une unité de canaux à l'intérieur au choix du canal d'alimentation d'air (1.1) ou du canal d'évacuation d'air (1.2) du premier appareil (1).

9. Installation thermique selon une des revendications 1 à 8,
**caractérisée en ce**
**qu'**au choix le canal d'alimentation d'air (2.1) et/ou le canal d'évacuation d'air (2.2) du deuxième appareil (2) présente, respectivement présentent une section transversale d'écoulement rectangulaire à l'intérieur du canal d'alimentation d'air (1.1), resp. du canal évacuation d'air (1.2).

10. Installation thermique selon une des revendications 1 à 9,
**caractérisée en ce**
**que** le canal d'alimentation d'air (2.1) et le canal évacuation d'air (2.2) du deuxième appareil (2) sont disposés à l'intérieur du canal d'alimentation d'air (1.1), respectivement du canal d'évacuation d'air (1.2) sur des zones de coin opposées de l'unité de canaux.
